# EUROPÄISCHE PATENTANMELDUNG

(11) **EP 4 707 319 A1**
(43) Veröffentlichungstag der Anmeldung: **11.03.2026**
(21) Anmeldenummer: 24199497.9
(22) Anmeldetag: 10.09.2024
(51) Int. Cl.: C08G 18/10, C08G 18/76, C08G 59/22, C09D 175/00, C08L 75/00

(54) **ISOCYANATFREIES POLYURETHAN-PRÄPOLYMER**

(71) Anmelder: STO SE & Co. KGaA, 79780 Stühlingen (DE)
(72) Erfinder: Fuchs, Berthold, 65207 Wiesbaden (DE); Schneider, Jan-Pierre, 64521 Groß-Gerau (DE)
(74) Vertreter: Gottschalk, Matthias

(57) **Zusammenfassung**

Die vorliegende Erfindung betrifft ein Polyurethan-Präpolymer, wobei die NCO-Endstellen des Polyurethan-Präpolymers durch kovalente Bindung vollständig blockiert sind, *dadurch gekennzeichnet, dass* die NCO-Endstellen des Polyurethan-Präpolymers mindestens zu einem Teil an die OH-Gruppe von 1,2-Glycerincarbonat gebunden sind und gegebenenfalls zum anderen Teil an OH-Gruppen eines Epoxidharzes gebunden sind. Die vorliegende Erfindung betrifft ferner Verfahren zur Herstellung des erfindungsgemäßen Polyurethan-Präpolymers. Ebenso betrifft die vorliegende Erfindung eine Zweikomponenten-Beschichtungszusammensetzung mit einer Harzkomponente (A), die als härtbaren Bestandteil mindestens ein erfindungsgemäßes Polyurethan-Präpolymer enthält, und einer Härterkomponente (B), die ein Härtungsmittel für das Polyurethan-Präpolymer in der Harzkomponente (A) enthält. Ferner betrifft die vorliegende Erfindung die Verwendung der erfindungsgemäßen Zweikomponenten-Beschichtungszusammensetzung als Bodenbeschichtung oder zur Betoninstandsetzung.

## Beschreibung

Die vorliegende Erfindung betrifft ein Polyurethan-Präpolymer, wobei die NCO-Endstellen des Polyurethan-Präpolymers durch kovalente Bindung vollständig blockiert sind. Die vorliegende Erfindung betrifft ferner ein Verfahren zur Herstellung des Polyurethan-Präpolymers. Die vorliegende Erfindung betrifft ebenso eine Zweikomponenten-Beschichtungszusammensetzung mit einer Harzkomponente (A), die als härtbaren Bestandteil mindestens ein erfindungsgemäßes Polyurethan-Präpolymer enthält, und einer Härterkomponente (B), die ein Härtungsmittel für das Polyurethan-Präpolymer in der Harzkomponente (A) enthält. Ferner betrifft die vorliegende Erfindung die Verwendung der erfindungsgemäßen Zweikomponenten-Beschichtungszusammensetzung als Bodenbeschichtung oder zur Betoninstandsetzung.

### Hintergrund der Erfindung

Zweikomponenten-Beschichtungszusammensetzungen mit einer Harzkomponente (A), die als härtbaren Bestandteil mindestens ein Polyurethan-Präpolymer enthalten, und einer Härterkomponente (B), die ein Härtungsmittel für das Polyurethan-Präpolymer in der Harzkomponente (A) enthält, sind im Stand der Technik gut bekannt. Bei Polyurethan-Präpolymeren, die freie Isocyanat-Gruppen (NCO-Endstellen) enthalten, handelt es sich jedoch um Gefahrstoffe, von denen ein mögliches Gesundheitsrisiko ausgeht. Für die Verarbeiter Isocyanat-basierter Beschichtungen werden zunehmend strengere Regelungen bezüglich der Handhabung dieser Gefahrstoffe festgelegt. Ein Beispiel dafür ist der *"Diisocyanat Führerschein".* Der Diisocyanat-Führerschein ist eine spezielle Schulung, die Mitarbeitern vermittelt, wie man sicher mit Isocyanathaltigen Produkten umgeht, die häufig in der industriellen Fertigung eingesetzt werden. Der Diisocyanat-Führerschein wird von vielen Arbeitgebern verlangt, um sicherzustellen, dass ihre Mitarbeiter in der Lage sind, Isocyanate sicher zu handhaben und somit Verletzungen oder gesundheitliche Schäden zu vermeiden.

Um freie NCO-Endstellen in dem Polyurethan-Präpolymer und die damit einhergehenden Gesundheitsgefahren zu vermeiden sowie um die Lagerstabilität derartiger Zweikomponenten-Beschichtungszusammensetzungen zu erhöhen ist es im Stand der Technik bekannt Polyurethan-Präpolymere zu verwenden, deren NCO-Endstellen mit einem Verkappungsmittel verkappt sind (verkapptes Polyurethan-Präpolymer), d.h. die NCO-Endstellen des Polyurethan-Präpolymers in der Harzkomponente (A) sind vollständig an ein Verkappungsmittel gebunden. Herkömmliche Verkappungsmittel sind im Stand der Technik bekannt und beinhalten beispielsweise Phenole (z.B. styrolisiertes Phenol, Cashewnussschalenöl (Cardanol als Hauptbestandteil)), sekundäre Amine (z.B. Dicyclohexylamin), Ketoxime (z.B. 2-Butanonoxim) oder Amide (z.B. Caprolactam).

Im Stand der Technik sind auch Zweikomponenten-Beschichtungszusammensetzungen bekannt, die als härtbaren Bestandteil in der Harzkomponente (A) Polyurethan-Präpolymer und Epoxid-Harz enthalten, wobei in diesen Systemen auf Basis eines Polyurethan-Epoxidharz-Hybrides (PEH) Polyurethan-Präpolymer und Epoxidharz nebeneinander in der Harzkomponente (A) vorliegen. In derartigen Polyurethan-Epoxidharz-Hybrid-Systemen (PEH) ist es notwendig ein verkapptes Polyurethan-Präpolymer zu verwenden, um eine lagerstabile Beschichtungszusammensetzung zu erhalten, d.h. es wird ein Polyurethan-Präpolymer verwendet, dessen NCO-Endstellen durch Verkappungsmittel blockiert sind. Teilweise können die NCO-Endstellen des Polyurethan-Präpolymer auch an OH-Gruppen, die in dem Epoxidharz vorhanden sind, gebunden sein.

Bei der Anwendung von Zweikomponenten-Beschichtungszusammensetzungen, die verkappte Polyurethan-Präpolymere enthalten, wird das an die NCO-Endstellen des Polyurethan-Präpolymers gebundene Verkappungsmittel abgespalten, um freie NCO-Endstellen zu erhalten, die für eine Vernetzungsreaktion zur Verfügung stehen. Bei dieser Endkappungs-/Deblockierungsreaktion kommt es in bestehenden Systemen jedoch zu vielfältigen Problemen während des Aushärtungsprozesses. Beispielsweise kann es zu unvollständigen Deblockierungen kommen, was zu einer unzureichenden Vernetzung im resultierenden Beschichtungsmaterial führt. Andererseits führt die Deblockierungsreaktion zu einer hohen Konzentration an freiem Verkappungsmittel, das in dem Beschichtungsmaterial verbleibt, wodurch sich unerwünschte Weichmachereffekte ergeben. Dies führt im Allgemeinen zu einer geringen mechanischen Belastbarkeit von Beschichtungsmaterialien, die auf herkömmlich verkappten, isocyanatfreien Polyurethan-Präpolymeren basieren. Ferner ist es bei Systemen auf Basis eines Polyurethan-Epoxidharz-Hybrides (PEH) bei der Umsetzung mit der Härterkomponente (B) schwierig die reaktionsträge Gruppe des verkappten Polyurethan-Präpolymers mit der reaktiven Epoxidgruppe des Epoxidharzes zu kombinieren. Dadurch kommt es in herkömmlichen PEH-Systemen der Aushärtung zur Ausbildung von separaten Epoxidharz-Domänen (Hartsegmente) und weichen Polyurethan-Domänen, was ohne ausreichende Phasenvermittlung oder auftretender Phaseninversion ebenfalls die mechanische Stabilität der resultierenden Beschichtung beeinträchtigt.

Bisher finden im Stand der Technik keine Systeme auf Basis verkappter, vollständig abspaltfreier Polyurethan-Präpolymere im Bereich von Bodenbeschichtung oder Betoninstandsetzung Anwendung, die die mechanische Belastbarkeit der resultierenden Beschichtung auf ein ausreichendes Niveau hebt. Herkömmliche Lösungsansätze basieren im Bereich Bodenbeschichtung oder Betoninstandsetzung alle auf mindestens teilweise abspaltbaren Verkappungen des Polyurethan-Präpolymers.

Eine Aufgabe der vorliegenden Erfindung ist die vorstehend skizzierten Probleme zu lösen. Insbesondere ist es vor dem vorstehend beschriebenen Hintergrund eine Aufgabe der vorliegenden Erfindung ein Polyurethan-Präpolymer, dessen NCO-Endstellen vollständig durch kovalente Bindung blockiert sind, wobei die Blockierung mittels Gruppen erfolgt, die einerseits durch Einwirkung der Härterkomponente (B) einer Zweikomponenten-Beschichtungszusammensetzungen nicht von den NCO-Endstellen des Polyurethan-Präpolymer abgespalten werden (abspaltfreies, isocyanatfreies Polyurethan-Präpolymer), wobei andererseits das abspaltfrei blockierte Polyurethan-Präpolymer weiterhin für Vernetzungsreaktionen mit der Härterkomponente (B) zur Verfügung steht.

### Zusammenfassung der Erfindung

Die vorliegende Erfindung betrifft ein Polyurethan-Präpolymer, wobei die NCO-Endstellen des Polyurethan-Präpolymers durch kovalente Bindung vollständig blockiert sind,
*dadurch gekennzeichnet, dass*
die NCO-Endstellen des Polyurethan-Präpolymers mindestens zu einem Teil an die OH-Gruppe von 1,2-Glycerincarbonat gebunden sind und gegebenenfalls zum anderen Teil an OH-Gruppen eines Epoxidharzes gebunden sind.

In einer Ausführungsform betrifft die Erfindung ein Polyurethan-Präpolymer, wobei die NCO-Endstellen des Polyurethan-Präpolymers vollständig an die OH-Gruppe von 1,2-Glycerincarbonat kovalent gebunden sind.

Die OH-Gruppe von 1,2-Glycerincarbonat 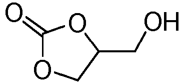 kann mit den NCO-Endstellen eines Polyurethan-Präpolymers reagieren, was zu einer kovalenten Bindung unter Ausbildung einer Urethanstruktur und zur Blockierung der betreffenden NCO-Endstelle führt. Durch diese kovalente Bindung bleibt das 1,2-Glycerincarbonat auch unter Einwirkung einer üblichen Härterkomponente (B) einer Zweikomponenten-Beschichtungszusammensetzung an die NCO-Endstelle des Polyurethan-Präpolymers gebunden. Es handelt sich also um eine abspaltfreie Blockierung der NCO-Endstelle. Stattdessen kann die Carbonatgruppe des an die NCO-Endstelle des Polyurethan-Präpolymers gebundenen 1,2-Glycerincarbonats etwa durch Reaktion mit einer Härterkomponente (B) einer Zweikomponenten-Beschichtungszusammensetzung, beispielsweise einem handelsüblichen Aminhärter-System, durch Addition der Amingruppe unter Ringöffnung des cyclischen Carbonats zu einer Hydroxyurethanstruktur umgesetzt werden. Dadurch ist erfindungsgemäß ein isocyanatfreies und verkapptes System möglich, das zu einem hohen Vernetzungsgrad in der resultierenden Beschichtung führt, und zwar ohne dass monomere Reste von Verkappungsmittel in der Endbeschichtung auftreten.

Ein weiterer Vorteil der vorliegenden Erfindung ist, dass Glycerin, etwa als Abfallstoff aus der Biodiesel-Produktion, als Ausgangsmaterial in großer Menge, kostengünstig und biobasiert zur Verfügung steht, und daraus 1,2-Glycerincarbonat auf nachhaltige Weise durch Umsetzung mit und unter Verbrauch von CO₂ gewonnen werden kann. Der Einsatz des 1,2-Glycerincarbonats gemäß der vorliegenden Erfindung hat unter diesem Gesichtspunkt im Vergleich zu üblichen Verkappungsmitteln auch einen positiven Einfluss auf die CO₂-Bilanz. Daher weist das erfindungsgemäße Polyurethan-Präpolymer einen hohen Nachhaltigkeitscharakter und eine zum Teil positive CO₂-Bilanz auf.

Die vorliegende Erfindung betrifft ferner Verfahren zur Herstellung des erfindungsgemäßen Polyurethan-Präpolymers. In einer Ausführungsform umfasst ein Verfahren zur Herstellung des erfindungsgemäßen Polyurethan-Präpolymer die Schritte:
(I) Vorlegen und Mischen
   o eines Vorläufer-Polyurethan-Präpolymers mit freien NCO-Endstellen,
   o 1,2-Glycerincarbonat und
   o gegebenenfalls eines Epoxidharzes, das OH-Gruppen aufweist, und anschließendes Umsetzen bis zum Verschwinden der Isocyanatbande im Bereich bei 2250 cm⁻¹ im IR-Spektrum.
   In einer weiteren Ausführungsform umfasst ein Verfahren zur Herstellung des erfindungsgemäßen Polyurethan-Präpolymer die Schritte:
(II) Vorlegen und Mischen
   o eines Vorläufer-Polyurethan-Präpolymers mit freien NCO-Endstellen, und
   o 1,2-Glycerincarbonat, und
   anschließendes Umsetzen bis eine Veränderung der Isocyanatbande im IR-Spektrum im Bereich bei 2250 cm⁻¹ nicht mehr nachzuweisen ist,
   anschließend Zugeben eines Epoxidharzes, das OH-Gruppen aufweist, und anschließendes Umsetzen bis zum Verschwinden der Isocyanatbande im Bereich bei 2250 cm⁻¹ im IR-Spektrum.
   In einer anderen Ausführungsform umfasst ein Verfahren zur Herstellung des erfindungsgemäßen Polyurethan-Präpolymer die Schritte:
(III) Vorlegen und Mischen
   o eines Vorläufer-Polyurethan-Präpolymers mit freien NCO-Endstellen, und
   o eines Epoxidharzes, das OH-Gruppen aufweist, und
   anschließendes Umsetzen bis eine Veränderung der Isocyanatbande im IR-Spektrum im Bereich bei 2250 cm⁻¹ nicht mehr nachzuweisen ist,
   anschließendes Zugeben von 1,2-Glycerincarbonat, und Umsetzen bis zum Verschwinden der Isocyanatbande im Bereich bei 2250 cm⁻¹ im IR-Spektrum.

Die vorliegende Erfindung betrifft ferner eine Zweikomponenten-Beschichtungszusammensetzung mit einer Harzkomponente (A), die als härtbaren Bestandteil mindestens ein erfindungsgemäßes Polyurethan-Präpolymer wie vorstehend beschrieben enthält, und einer Härterkomponente (B), die ein Härtungsmittel für das Polyurethan-Präpolymer in der Harzkomponente (A) enthält.

In einer weiteren Ausführungsform betrifft die vorliegende Erfindung die Verwendung der erfindungsgemäßen Zweikomponenten-Beschichtungszusammensetzung als Bodenbeschichtung oder zur Betoninstandsetzung.

### Kurze Beschreibung der Abbildungen

Abbildung 1 zeigt beispielhaft die vereinfachte Struktur eines erfindungsgemäßen Polyurethan-Präpolymers.
Abbildung 2 zeigt beispielhaft die vereinfachte Struktur eines unverkappten Polyurethan-Präpolymers mit freien NCO-Endstellen.
Abbildung 3 zeigt beispielhaft die Struktur eines Epoxidharzes mit OH-Gruppen.

### Detaillierte Beschreibung der Erfindung

Wie vorstehend ausgeführt betrifft die vorliegende Erfindung in ihrer allgemeinen Form ein Polyurethan-Präpolymer, wobei die NCO-Endstellen des Polyurethan-Präpolymers durch kovalente Bindung vollständig blockiert sind, dadurch gekennzeichnet, dass die NCO-Endstellen des Polyurethan-Präpolymers mindestens zu einem Teil an die OH-Gruppe von 1,2-Glycerincarbonat gebunden sind und gegebenenfalls zum anderen Teil an OH-Gruppen eines Epoxidharzes gebunden sind. Die kovalente Bindung der OH-Gruppe von 1,2-Glycerincarbonat an die die NCO-Endstellen des Polyurethan-Präpolymers gemäß der vorliegenden Erfindung ist irreversibel, d.h. auch unter Einwirkung einer üblichen Aminhärterkomponente bei moderaten Temperaturen (unter 150°C) findet keine Deblockierung statt.

### Erfindungsgemäßes Polyurethan-Präpolymer

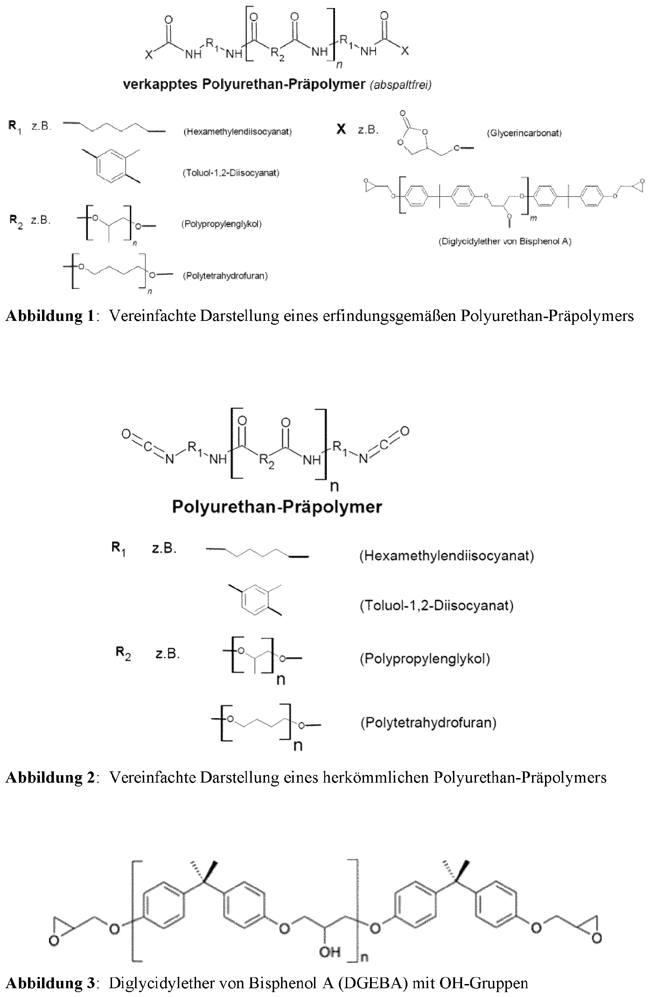

Eine allgemeine, vereinfachte Struktur eines unverkappten Polyurethan-Präpolymers ist beispielhaft in Abbildung 2 veranschaulicht. Die Bindung der Reste R₁ und R₂ zur anliegenden allgemeinen Struktur ist fett gezeichnet und die Basis der entsprechenden Komponente in Klammern genannt. R₁ beschreibt die Polyisocyanatstruktur und R₂ die Polyolstruktur. In Abbildung 2 ist die Struktur vereinfacht linear gezeigt, durch Verwendung von Polyolen mit Hydroxylfunktionalitäten >2 bzw. Polyisocyanaten mit Isocyanatfunktionalitäten >2 können jedoch auch Verzweigungen resultieren. Das unverkappte Polyurethan-Präpolymer nach Abbildung 2 weist NCO-Endstellen auf.

Im Gegensatz dazu sind wie in Abbildung 1 beispielhaft gezeigt die NCO-Endstellen des erfindungsgemäßen Polyurethan-Präpolymers durch kovalente Bindung vollständig blockiert, wobei NCO-Endstellen des Polyurethan-Präpolymers mindestens zu einem Teil an die OH-Gruppe von 1,2-Glycerincarbonat gebunden sind. Gegebenenfalls können die NCO-Endstellen des erfindungsgemäßen Polyurethan-Präpolymers zum anderen Teil an OH-Gruppen eines Epoxidharzes gebunden sein. Abbildung 1 zeigt die vereinfachte Struktur des verkappten, abspaltfreien Polyurethan-Präpolymers gemäß der vorliegenden Erfindung. Die Bindung der Reste R₁, R₂ und X zur anliegenden allgemeinen Struktur ist fett gezeichnet und die Basis der entsprechenden Komponente in Klammern benannt. R₁ beschreibt die Polyisocyanatstruktur, R₂ die Polyolstruktur und X das 1,2-Glycerincarbonat bzw. ein OH-funktionelles Epoxidharz. In der Abbildung ist die Struktur vereinfacht linear gezeigt, durch Verwendung von Polyolen mit Hydroxylfunktionalitäten >2 bzw. Polyisocyanaten mit Isocyanatfunktionalitäten >2 können aber auch Verzweigungen resultieren.

Gemäß der vorliegenden Erfindung wird die OH-Gruppe von 1,2-Glycerincarbonat mit den freien NCO-Endstellen eines Vorläufer-Polyurethan-Präpolymers zur Reaktion gebracht, was zu einer kovalenten Bindung unter Ausbildung einer Urethanstruktur und zur Blockierung der betreffenden NCO-Endstelle führt. Durch diese kovalente Bindung bleibt das 1,2-Glycerincarbonat auch unter Einwirkung einer üblichen Härterkomponente (B) einer Zweikomponenten-Beschichtungszusammensetzung (unter üblichen Anwendungsbedingungen) an die NCO-Endstelle des Polyurethan-Präpolymers gebunden. Es handelt sich also um eine abspaltfreie Blockierung der NCO-Endstelle. Stattdessen kann die Carbonatgruppe des an die NCO-Endstelle des Polyurethan-Präpolymers gebundenen 1,2-Glycerincarbonats, etwa durch Reaktion mit einer Härterkomponente (B) einer Zweikomponenten-Beschichtungszusammensetzung, beispielsweise einem handelsüblichen Aminhärter-System, durch Addition der Amingruppe unter Ringöffnung des cyclischen Carbonats zu einer Hydroxyurethanstruktur umgesetzt werden. Dadurch ist erfindungsgemäß ein isocyanatfreies und verkapptes System möglich, das zu einem hohen Vernetzungsgrad in der resultierenden Beschichtung führt, und zwar ohne dass monomere Reste von Verkappungsmittel in der Endbeschichtung auftreten.

In einer Ausführungsform sind die NCO-Endstellen des erfindungsgemäßen Polyurethan-Präpolymers vollständig an die OH-Gruppe von 1,2-Glycerincarbonat kovalent gebunden. Alternativ sind die NCO-Endstellen des erfindungsgemäßen Polyurethan-Präpolymers nur zu einem Teil an die OH-Gruppe von 1,2-Glycerincarbonat gebunden und sind zum anderen Teil an OH-Gruppen eines Epoxidharzes gebunden. Epoxidharze, die OH-Gruppen enthalten sind im Stand der Technik bekannt. Abbildung 3 zeigt beispielhaft die Struktur eines Diglycidylethers von Bisphenol A (DGEBA), wobei bei einem Polymerisationsgrad von n≠0 OH-Gruppen enthalten sind. Derartige Epoxidharze, die OH-Gruppen enthalten, fallen bei der Herstellung als Nebenprodukt prozessbedingt an. Wie im Stand der Technik bekannt sind glycidierte Epoxidharze ein Produkt aus einer Verbindung mit Hydroxy-Gruppen und Epichlorhydrin. Die Hydroxy-Gruppe kann dabei von Alkoholen, wie etwa aliphatischen oder phenolischen Diolen bzw. Polyolen, oder von Carbonsäuren, wie etwa Dicarbonsäuren, stammen. Als Phenole werden üblicherweise Verbindungen wie Bisphenol A, Bisphenol F und Novolake verwendet. Als mehrwertige Alkohole werden Verbindungen wie 1,4-Butandiol eingesetzt. Abhängig von der Anzahl der OH-Gruppen in dem Alkohol können Mono-, Di- oder Polyglycidylether entstehen, Diole führen zu Diglycidylethern und Polyole führen zu Polyglycidylethern. Erfindungsgemäß geeignete Epoxidharze sind ein Produkt aus einem mindestens difunktionellen Alkohol (z.B. Bisphenol A, Bisphenol F, Trimethylolpropan, etc.) und Epichlorhydrin, wobei Glycidylether-Funktionen resultieren. Prozessbedingt fallen bei der Herstellung von Epoxidharzen weitere Nebenprodukte an, die OH-Gruppen enthalten. Die Mechanismen zur Bildung dieser Nebenprodukte sind dem Fachmann bekannt. Die Bindung der in einem Epoxidharz enthaltenen OH-Gruppen an NCO-Endstellen des erfindungsgemäßen Polyurethan-Präpolymers führt ebenfalls zur irreversiblen Blockierung der NCO-Gruppen. Gemäß letzterer Ausführungsform wird zur Blockierung der NCO-Endstellen des Polyurethan-Präpolymers zum Teil ein Epoxidharz verwendet, das auch unaufgereinigtes Nebenprodukt mit OH-Gruppen enthält. Der Begriff *"Polymerisationsgrad n"* in Sinne der vorliegenden Erfindung ist z.B. in Abbildung 3 am Beispiel eines Diglycidylethers von Bisphenol A (DGEBA) näher veranschaulicht. Bei der Umsetzung von Diolen mit Epichlorhydrin zur Herstellung von Epoxidharzen ergeben sich herstellungsbedingt unter Öffnung eines Epoxidrings auch dimerisierte oder höherwertige Produkte der allgemeinen Formel GE-[DO-CH₂(COH)CH₂]ₙ-DO-GE, wobei GE eine Gylcidylether-Einheit und DO die Grundstruktur des Diols bezeichnet. Der Index n in der vorstehenden allgemeinen Formel wird in der vorliegenden Erfindung als Polymerisationsgrad n bezeichnet. Der Begriff *"mittlerer Polymerisationsgrad* n" meint gemäß der Erfindung die Summe von n über alle vorhandenen Moleküle geteilt durch die Gesamtzahl der vorhandenen Moleküle. Bei einem Polymerisationsgrad von n≠0 ergeben sich Epoxidharze, die OH-Gruppen enthalten. Auch die Reaktion der OH-Gruppe eines Epoxidharzes mit freien NCO-Endstellen eines Vorläufer-Polyurethan-Präpolymers führt zu einer kovalenten Bindung unter Ausbildung einer Urethanstruktur und zur irreversiblen Blockierung der betreffenden NCO-Endstelle. Durch diese kovalente Bindung bleibt das Epoxidharz über diese OH-Gruppe auch unter Einwirkung einer üblichen Härterkomponente (B) einer Zweikomponenten-Beschichtungszusammensetzung an die NCO-Endstelle des Polyurethan-Präpolymers gebunden. Es handelt sich also auch in diesem Fall um eine abspaltfreie Blockierung der NCO-Endstelle. Allerdings steht gemäß dieser Ausführungsform eine derartig blockierte NCO-Endstelle über die Epoxidgruppen des Epoxidharzes für weitere Vernetzungsreaktionen zur Verfügung. Dadurch ist erfindungsgemäß auch gemäß dieser Ausführungsform ein isocyanatfreies System möglich, das abspaltfrei zu einem hohen Vernetzungsgrad in der resultierenden Beschichtung führt.

### Herstellung des erfindungsgemäßen Polyurethan-Präpolymers

Wie vorstehend ausgeführt unterscheidet sich das Polyurethan-Präpolymer der vorliegenden Erfindung vom Stand der Technik im Wesentlichen dadurch, dass die NCO-Endstellen der Polyurethan-Präpolymers mindestens zu einem Teil an die OH-Gruppe von 1,2-Glycerincarbonat gebunden sind und gegebenenfalls zum anderen Teil an OH-Gruppen eines Epoxidharzes gebunden sind. Die vorliegende Erfindung betrifft daher auch ein Verfahren zur Herstellung des erfindungsgemäßen Polyurethan-Präpolymers. Gemäß der Erfindung kann die Herstellung eines sowohl mit 1,2-Glycerincarbonat und gegebenenfalls auch OH-Gruppen enthaltendem Epoxidharz verkappten Polyurethan-Präpolymers in einem einstufigen Verfahren oder einem zweistufigen Verfahren durchgeführt werden.

In einer Ausführungsform wird das sowohl mit 1,2-Glycerincarbonat und gegebenenfalls auch OH-Gruppen enthaltendem Epoxidharz verkappte Polyurethan-Präpolymer in einem einstufigen Verfahren hergestellt. Demgemäß betrifft die vorliegende Erfindung auch ein Verfahren zur Herstellung eines erfindungsgemäßen Polyurethan-Präpolymers, umfassend die Schritte: Vorlegen und Mischen eines Vorläufer-Polyurethan-Präpolymers mit freien NCO-Endstellen des Polyurethan-Präpolymers, des Verkappungsmittels, von 1,2-Glycerincarbonat und gegebenenfalls eines Epoxidharzes, das OH-Gruppen, und anschließendes Umsetzen bis zum Verschwinden der Isocyanatbande im Bereich bei ca. 2250 cm⁻¹ im IR-Spektrum. Gegebenenfalls können anschließend weitere Bestandteile zugegeben werden.

Gemäß dieser Ausführungsform wird das Vorläufer-Polyurethan-Präpolymer mit dem 1,2-Glycerincarbonat und gegebenenfalls einem Epoxidharz, das OH-Gruppen enthält, vorgelegt und gemischt. Insbesondere falls die anschließende Umsetzung bei Raumtemperatur erfolgt, kann bereits auf dieser Stufe Weichmacher zugegeben werden bzw. wird bevorzugt zugegeben, um die Verarbeitbarkeit zu verbessern. Ferner wird dem Gemisch üblicherweise ein Katalysator für die Verkappungsreaktion zugegeben. Anschließend wird das Gemisch zur Umsetzung bis zum vollständigen Verschwinden der Isocyanatbande im IR-Spektrum bei Raumtemperatur oder erhöhter Temperatur gerührt. Der Anteil der NCO-Endstellen im Polyurethan-Präpolymer, der durch 1,2-Glycerincarbonat bzw. gegebenenfalls OH-Gruppen des Epoxidharzes verkappt ist, wird dabei durch geeignete Wahl der Mengen (bezogen auf die der NCO-Endstellen des Vorläufer-Polyurethan-Präpolymers) an 1,2-Glycerincarbonat bzw. Epoxidharz (unter Berücksichtigung des Anteils der OH-Gruppen im jeweiligen Epoxidharz) eingestellt. Die Menge an NCO-Endstellen im eingesetzten Vorläufer-Polyurethan-Präpolymer ist ebenso wie die Menge an 1,2-Glycerincarbonat bekannt. Der Anteil der OH-Gruppen im gegebenenfalls zusätzlich eingesetzten Epoxidharz kann gemäß der hierin beschriebenen Methoden (beispielsweise durch bestimmen des Polymerisationsgrades n) bestimmt bzw. berechnet werden. Die Summe aus 1,2-Glycerincarbonat und OHfunktionellem Epoxidharz kann hierbei stöchiometrisch oder überstöchiometrisch in Bezug auf die NCO-Endstellen im Vorläufer-Polyurethan-Präpolymer sein. In einer bevorzugten Ausführungsform wird das 1,2-Glyceringcarbonat bzw. OH-funktionelle Epoxidharz im Überschuss eingesetzt, um eine schnellere Reaktion (bei Raumtemperatur) und eine verarbeitbare Viskosität zu gewährleisten. Die Vollständigkeit der Verkappungsreaktion wird gemäß der in der vorliegenden Beschreibung ausgeführten Methoden (*"Reaktionsverfolgung"*) überprüft. Gegebenenfalls kann 1,2-Glycerincarbonat und/oder OH-funktionelles Epoxidharz nachdosiert werden, bis die NCO-Bande im IR-Spektrum verschwunden ist.

Der Begriff *"Vorläufer-Polyurethan-Präpolymer"* bezeichnet erfindungsgemäß ein im Stand der Technik übliches Produkt aus einer Polyol-Komponente (mehrfunktioneller Alkohol), bevorzugt auf Polymerbasis, oder Mischungen aus mehreren Polyol-Komponenten und einem Polyisocyanat (mehrfunktionelles Isocyanat) oder Mischungen aus mehreren Polyisocyanaten. Die Hydroxyl-Gruppen des Polyols werden an die Isocyanatgruppen des Polyisocyanats addiert. Die Isocyanat-Gruppen werden hierbei stöchiometrisch im Überschuss (Isocyanatequivalent zu OH-Äquivalent mind. 1, 1: 1 eq) eingesetzt, wodurch freie, endständige Isocyanat-Gruppen im PU-Präpolymer verbleiben. Eine allgemeine, vereinfachte Struktur eines geeigneten Vorläufer-Polyurethan-Präpolymers ist beispielhaft in Abbildung 2 veranschaulicht. Erfindungsgemäß geeignete Vorläufer-Polyurethan-Präpolymere sind nicht besonders beschränkt. Vielmehr können handelsübliche PU-Präpolymere eingesetzt werden. Beispielsweise können PU-Präpolymere verwendet werden auf Polyol-Basis von Polyalkylenglykolen wie z.B. Polypropylenglykol, Polyethylenglykol oder Polytetrahydrofuran sowie hydroxylterminierte Polybutadiene.

In einer bevorzugten Ausführungsform liegen die Molekularmassen der verwendeten Polyole zwischen 500 bis 3000 g/mol. In einer anderen bevorzugten Ausführungsform sind die verwendeten Polyisocyanate beispielsweise Toluoldiisocyanat (TDI), Methylendiphenylisocyanat (MDI), Hexamethylendiisocyanat (HDI) oder Isophorondiisocyanat (IPDI). Ebenso können von den Polyol- sowie Polyisocyanattypen auch Mischungen derer verwendet werden.

In einer Ausführungsform werden Polypropylenglykole mit einem Molekulargewicht von 500 bis 3000 g/mol in Kombination mit TDI oder MDI eingesetzt. In einer bevorzugten Ausführungsform werden Polypropylenglykole mit Molekulargewichten von 1000 bis 2500 g/mol in Kombination mit TDI eingesetzt.

In einer Ausführungsform haben die einsetzbaren Vorläufer-Polyurethan-Präpolymere eine Molekularmasse zwischen 500 und 10.000 g/mol, vorzugsweise zwischen 1000 und 8000 g/mol, stärker bevorzugt zwischen 1500 und 6000 g/mol. Die Molekularmasse kann wie im Stand der Technik üblich via GPC und Kalibrierung über Polystyrol-Standards bestimmt werden, soweit sie nicht bereits vom Hersteller angegeben wird.

In einer Ausführungsform haben die einsetzbaren Vorläufer-Polyurethan-Präpolymere einen viskosen aber flüssigen Charakter, d.h. dynamische Viskositäten bei 25°C nach EN ISO 3219 im Bereich ≤200.000 mPas, bevorzugt ≤100.000 mPas, stärker bevorzugt ≤60.000 mPas, wie etwa ≤30.000 mPas, mit geringer Kristallisationsneigung. In einer weiteren Ausführungsform haben die einsetzbaren Vorläufer-Polyurethan-Präpolymere einen niedrigen Glasübergang T_{g} von <0°C, bevorzugt <-20°C. Die Glasübergangstemperatur T_{g} kann nach DIN EN 12614 über DSC bestimmt werden, soweit sie nicht bereits vom Hersteller angegeben wird. In einer weiteren Ausführungsform haben die einsetzbaren Vorläufer-Polyurethan-Präpolykmere Funktionalitäten im Bereich von >1,5 eq/Molekül, bevorzugt ≥2,0 eq/Molekül bis ≤4 eq/Molekül. Die Funktionalität der Vorläufer-Polyurethan-Präpolymers kann mittels der Funktionalität des zur Herstellung verwendeten Polyols gesteuert werden. Ferner können die Funktionalitäten der Vorläufer-Polyurethan-Präpolymere anhand der Molekulargewichte (GPC) und der NCO-Konzentration (gegeben) berechnet werden.

Zur Herstellung des erfindungsgemäßen Polyurethan-Präpolymers geeignete Epoxidharze, die OH-Gruppen enthalten, wurden bereits vorstehend beschrieben. Gemäß der vorliegenden Erfindung sind die NCO-Endstellen des erfindungsgemäßen Polyurethan-Präpolymers mindestens zu einem Teil an die OH-Gruppe von 1,2-Glycerincarbonat gebunden und sind gegebenenfalls zum anderen Teil an OH-Gruppen eines Epoxidharzes gebunden. In einer bevorzugten Ausführungsform sind die NCO-Endstellen des Polyurethan-Präpolymers vollständig an die OH-Gruppe von 1,2-Glycerincarbonat kovalent gebunden, d.h. es wird kein OH-Gruppen enthaltendes Epoxidharz bei der Herstellung verwendet.

Geeignete Weichmacher, die bei der Herstellung des Polyurethan-Präpolymers verwendet werden können, sind im Stand der Technik auch bekannt. Illustrative Beispiele umfassen, sind aber nicht beschränkt auf beispielsweise Phthalsäureester, Phosphate, acyclische Ester, Oxicarbonsäureester oder Trimellithate. Bevorzugt werden Phthalsäureester und acyclische Ester eingesetzt. Besonders bevorzugt sind Adipate, z.B. Dialkyladipate, wie etwa Dioctyladipate, sowie Alkyl-Benzylphtahlate.

Geeignete Katalysatoren, die bei der Herstellung des Polyurethan-Präpolymers verwendet werden können, sind im Stand der Technik ebenfalls bekannt. Illustrative Beispiele für solche Katalysatoren umfassen, sind aber nicht beschränkt auf organische Metallsalze (Lewis-Säuren) oder tertiäre Amine. Mögliche tertiäre Amine beinhalten z.B. 1,4-Diazabicyclo[2.2.2]octan. Ferner geeignet sind Metallionen (z.B. Zinn, Zink, Bismuth, Zirkonium) und zugehörige organische Reste (z.B. Acetylacetonat, Octat, Laurat). Bevorzugt sind Zinn-freie Katalysatoren, besonders bevorzugt Mischungen auf Basis von Zink und Bismuth (z.B. Borchikat 0244).

In einer anderen Ausführungsform wird das erfindungsgemäße Polyurethan-Präpolymer hergestellt durch Vorlegen und Mischen eines Vorläufer-Polyurethan-Präpolymers mit freien NCO-Endstellen, und 1,2-Glycerincarbonat, und anschließendes Umsetzen bis eine Veränderung der Isocyanatbande im IR-Spektrum im Bereich bei 2250 cm⁻¹ nicht mehr nachzuweisen bzw. der nach DIN EN 1242:2013 gewünschte NCO-Wert erreicht ist. Anschließend wird ein eines Epoxidharzes, das OH-Gruppen aufweist, zugegeben und Umsetzt bis die Isocyanatbande im Bereich bei 2250 cm⁻¹ im IR-Spektrum verwindet. In einer weiteren Ausführungsform wird das erfindungsgemäße Polyurethan-Präpolymer hergestellt durch Vorlegen und Mischen eines Vorläufer-Polyurethan-Präpolymers mit freien NCO-Endstellen, und eines Epoxidharzes, das OH-Gruppen aufweist, und anschließendes Umsetzen bis eine Veränderung der Isocyanatbande im IR-Spektrum im Bereich bei 2250 cm⁻¹ nicht mehr nachzuweisen ist, und anschließendes Zugeben von 1,2-Glycerincarbonat, und Umsetzen bis zum Verschwinden der Isocyanatbande im Bereich bei 2250 cm⁻¹ im IR-Spektrum.

In einer bevorzugten Ausführungsform umfasst das Verfahren zur Herstellung des erfindungsgemäßen Polyurethan-Präpolymers die Schritte Vorlegen und Mischen eines Vorläufer-Polyurethan-Präpolymers mit freien NCO-Endstellen und von 1,2-Glycerincarbonat, wobei die Stoffmenge an 1,2-Glycerincarbonat in dem resultierenden Gemisch von 1,0*n*x bis 1,4*n*x beträgt. Dabei bezeichnet n die Stoffmenge an Vorläufer-Polyurethan-Präpolymer in dem resultierenden Gemisch und x die mittlere Anzahl an NCO-Endstellen in dem Vorläufer-Polyurethan-Präpolymer. Das Gemisch kann auch Weichmacher enthalten, wobei die Stoffmenge an Weichmacher in dem resultierenden Gemisch gegebenenfalls von 0*n bis 3,0*n, vorzugsweise 1,0*n bis 2,5*n, stärker bevorzugt 1,2*n bis 2,2*n, beträgt. Dabei bezeichnet n ebenfalls die Stoffmenge an Vorläufer-Polyurethan-Präpolymer in dem resultierenden Gemisch. Ferner kann das Gemisch Katalysator enthalten, beispielsweise 0,1 bis 0,3 Gew.%, vorzugsweise 0,2 bis 0,25 Gew.%, bezogen auf das Gesamtgewicht des resultierenden Gemisches, an Katalysator. Der Katalysator ist dabei aus organischen Metallsalzen und/oder tertiären Aminen ausgewählt. Gemäß der vorliegenden Ausführungsform umfasst das erfindungsgemäße Verfahren zur Herstellung des Polyurethan-Präpolymers ferner den anschließenden Schritt des Umsetzens des vorstehend definierten resultierenden Gemisches bis eine Veränderung der Isocyanatbande im IR-Spektrum im Bereich bei 2250 cm⁻¹ nicht mehr nachzuweisen ist. In einer besonders bevorzugten Ausführungsform wird die Umsetzung durchgeführt bis zum Verschwinden der Isocyanatbande im Bereich bei 2250 cm⁻¹ im IR-Spektrum.

Die vorliegende Erfindung betrifft auch eine Zweikomponenten-Beschichtungszusammensetzung mit einer Harzkomponente (A), die als härtbaren Bestandteil mindestens ein erfindungsgemäßes Polyurethan-Präpolymer wie vorstehend beschrieben enthält. Die Harzkomponente (A) in der Zweikomponenten-Beschichtungszusammensetzung der Erfindung kann im Zuge der Herstellung des erfindungsgemäßen Polyurethan-Präpolymers hergestellt werden. Weitere Ausführungsformen der Erfindung zur Herstellung des Polyurethan-Präpolymer bzw. der Harzkomponente (A) sind daher nachstehend im Zusammenhang mit der Harzkomponente (A) beschrieben.

### Zweikomponenten-Beschichtungszusammensetzung

Die Erfindung betrifft auch eine Zweikomponenten-Beschichtungszusammensetzung. Die Zweikomponenten-Beschichtungszusammensetzung der vorliegenden Erfindung umfasst eine Harzkomponente (A), die als härtbaren Bestandteil mindestens ein erfindungsgemäßes Polyurethan-Präpolymer wie vorstehend beschrieben enthält, und eine Härterkomponente (B), die ein Härtungsmittel für das Polyurethan-Präpolymer in der Harzkomponente (A) enthält.

Die Härterkomponente (B) der erfindungsgemäßen Zweikomponenten-Beschichtungszusammensetzung umfasst ein Härtungsmittel für das härtbare Harz der Harzkomponente (A). Beispielsweise können als Härtungsmittel im Stand der Technik übliche Aminhärter-Systeme sowie deren Epoxidaddukte mit z.B. Bisphenol-A-diglycidylether (DGEBA) eingesetzt werden. Illustrative Beispiele umfassen, sind aber nicht beschränkt auf aliphatische Amine (wie etwa Triethylentetraamin (TETA)), cycloaliphatische Amine (wie etwa Isophorondiamin (IPD)), arylalkylische Amine (wie etwa m-Xylylendiamin (MXDA)), Amidoamine, Polyamide, bzw. Mischungen aus arylalkylischen Aminen (bevorzugt MXDA), cycloaliphatischen Aminen (bevorzugt IPD) und deren Epoxidaddukte. In einer Ausführungsform werden gemäß der Erfindung keine Mannich-Basen in dem Aminhärter-System eingesetzt. In einer weiteren Ausführungsform umfasst das Aminhärter-System mindestens eine Verbindung, die zwei oder mehr als zwei Amin-Gruppen aufweist. In einer weiteren bevorzugten Ausführungsform werden Epoxidaddukte eines aliphatischen Amins in dem Aminhärter-System eingesetzt.

Die Härterkomponente (B) der erfindungsgemäßen Zweikomponenten-Beschichtungszusammensetzung kann gegebenenfalls weiterhin einen im Stand der Technik im Prinzip bekannten Beschleuniger enthalten. Illustrative Beispiele für geeignete Beschleuniger umfassen, sind aber nicht beschränkt auf einem Fachmann bekannte Alkohole, vorzugsweise phenolische Varianten, wie z.B. Benzylalkohol, styrolisierte Phenoltypen aber auch Phenole auf Basis von Cashewnussschalenöl sowie tertiäre Amine wie z.B. 2,4,6-Tri(dimethylaminomethyl)phenol oder Imidazolderivate.

In einer Ausführungsform umfasst die Härterkomponente (B) der erfindungsgemäßen Zweikomponenten-Beschichtungszusammensetzung 40-100 Gew.% eines Amins oder eines Amingemisches und 0-60 Gew.% eines Beschleunigers, jeweils bezogen auf das Gesamtgewicht der Härterkomponente (B).

Die erfindungsgemäße Zweikomponenten-Beschichtungszusammensetzung umfasst weiterhin eine Harzkomponente (A). Die Harzkomponente (A) enthält als härtbaren Bestandteil mindestens ein vorstehend beschriebenes Polyurethan-Präpolymer gemäß der vorliegenden Erfindung.

Ferner kann die Harzkomponente (A) auch weitere Bestandteile enthalten. In einer Ausführungsform enthält die Harzkomponente (A) weiterhin mindestens ein Epoxidharz. Geeignete Epoxidharze sind nicht besonders beschränkt und einem Fachmann bekannt. Beispielsweise können die vorstehend im Zusammenhang mit dem erfindungsgemäßen Polyurethan-Präpolymer beschriebenen Epoxidharze, die OH-Gruppen enthalten, auch an dieser Stelle verwendet werden. Allerdings ist es bei einem Epoxidharz, das der Harzkomponente (A) nach der Herstellung des erfindungsgemäßen Polyurethan-Präpolymers (Verschwinden der Isocyanatbande im Bereich bei 2250 cm⁻¹ im IR-Spektrum) zugegeben wird nicht unbedingt erforderlich, dass das Epoxidharz tatsächlich OH-Gruppen enthält. In einer bevorzugten Ausführungsform werden jedoch auch an dieser Stelle OH- funktionelle Epoxidharze verwendet, wie sie vorstehend im Zusammenhang mit dem erfindungsgemäßen Polyurethan-Präpolymer beschrieben wurden.

Die Harzkomponente (A) kann ferner Füllstoffe und/oder Pigmente enthalten. Geeignete Füllstoffe oder Pigmente sind nicht besonders beschränkt und im Stand der Technik bekannt. Im Prinzip können alle dem Fachmann bekannten Pigmente oder anorganischen Füllstoffe eingesetzt werden. Beispiele für erfindungsgemäß geeignete, illustrative Füllstoffe umfassen, sind aber nicht beschränkt auf Silikate (wie etwa Kieselsäuren, Quarz, Talk oder Feldspat, etc.), Carbonate (wie etwa Calciumcarbonat, Dolomit oder Magnesiumcarbonat, etc.), Sulfate (wie etwa Bariumsulfat oder Calciumsulfat, etc.) oder Aluminiumoxide und Aluminiumhydroxide. Beispiele für erfindungsgemäß geeignete, illustrative Pigmente umfassen, sind aber nicht beschränkt auf organische Pigmente (wie etwa Azo-, Monoazo-, Metallkomplex- oder Polyzyklische Pigmente, etc.) oder anorganische Pigmente (wie etwa Oxide/Oxidhydroxide, z.B. Titanoxid oder Sulfid-, Bleichromate-, Komplexsalz- und Silikatpigmente, etc.)

Ferner kann die Harzkomponente (A) übliche Additive enthalten. Geeignete Additive sind nicht besonders beschränkt und im Stand der Technik bekannt. Im Prinzip können alle dem Fachmann in diesem Zusammenhang bekannten Additive eingesetzt werden. Beispiele für erfindungsgemäß geeignete, illustrative Additive umfassen, sind aber nicht beschränkt auf Additive zur Entlüftung bzw. Entschäumung (z.B. organische Flüssigkeiten, wie etwa Siloxane oder Acrylate, etc.), zur Oberflächenmodifizierung (Mattierung, Gleitfähigkeit, Kratzfestigkeit, z.B. Silikone, Wachse, Kieselsäuren), zur Verlaufsmodifizierung (z.B. Polymere, wie etwa Acrylate oder Silikone, Tenside oder Lösemittel), zur Dispergier-/Benetzungsmodifizierung (Dispergierhilfe, Stabilisierung, Pigmentbenetzung, z.B. Polymere, wie etwa Acrylpolymere oder Polyurethane, etc., oder Tenside), zur Verdickung (z.B. anorganische Verdicker, wie Silikate), zur Haftvermittlung (z.B. organofunktionelle Silane) sowie Lichtschutzmittel, Flammschutzmittel, Antistatika, Hautverhinderungsmittel, Korrosionsinhibitoren oder Stabilisatoren für verkapptes PU-Präpolymer (z.B. Acetylaceton). In einer Ausführungsform werden erfindungsgemäß jedoch keine Stabilisatoren in der Harzkomponente (A) eingesetzt, da die Harzkomponente (A) der erfindungsgemäßen Zweikomponenten-Beschichtungszusammensetzung mit dem erfindungsgemäßen Polyurethan-Präpolymer auch ohne Zusatz von Stabilisatoren eine ausreichende Stabilität aufweist. In einer weiteren Ausführungsform werden erfindungsgemäß wenig oder gar keine Lösemittel in der Harzkomponente (A) eingesetzt.

Des Weiteren kann die Harzkomponente (A), wie bereits vorstehend im Zusammenhang mit der Herstellung des erfindungsgemäßen Polyurethan-Präpolymers beschrieben, Weichmacher enthalten.

Ferner kann die Harzkomponente (A) gegebenenfalls Reaktivverdünner enthalten. Geeignete Reaktivverdünner sind im Stand der Technik ebenfalls bekannt. Illustrative Beispiele davon umfassen, sind aber nicht beschränkt auf glycidylfunktionalisierte Alkohole, wie z.B. C₁₂-C₁₄ aliphatische Glycidylether oder Diglycidylether von Butandiol, Hexandiol, Neopentylglykol oder Polypropylenglykol. Ferner können Carbonate, wie etwa Propylencarbonat, im Rahmen der vorliegenden Erfindung als Reaktivverdünner eingesetzt werden.

In einer Ausführungsform umfasst die Harzkomponente (A) der erfindungsgemäßen Zweikomponenten-Beschichtungszusammensetzung, jeweils bezogen auf das Gesamtgewicht der Harzkomponente (A), 20-60 Gew.% eines erfindungsgemäßen Polyurethan-Präpolymers, wie vorstehend beschrieben, 10-30 Gew.% mindestens eines Epoxidharzes, wie vorstehend beschrieben, 15-40 Gew.% an Füllstoffen und/oder Pigmenten, wie vorstehend beschrieben, 1-10 Gew.% an Additiven, wie vorstehend beschrieben, gegebenenfalls 0-20 Gew.% an Weichmachern, wie vorstehend beschrieben, und gegebenenfalls 0-20 Gew.% an Reaktivverdünnern, wie vorstehend beschrieben. In einer bevorzugten Ausführungsform umfasst die Harzkomponente (A) der erfindungsgemäßen Zweikomponenten-Beschichtungszusammensetzung, jeweils bezogen auf das Gesamtgewicht der Harzkomponente (A), 25-55 Gew.% eines erfindungsgemäßen Polyurethan-Präpolymers, wie vorstehend beschrieben, 15-25 Gew.% mindestens eines Epoxidharzes, wie vorstehend beschrieben, 20-35 Gew.% an Füllstoffen und/oder Pigmenten, wie vorstehend beschrieben, 1-8 Gew.% an Additiven, wie vorstehend beschrieben, gegebenenfalls 0-15 Gew.% an Weichmachern, wie vorstehend beschrieben, und gegebenenfalls 0-15 Gew.% an Reaktivverdünnern, wie vorstehend beschrieben. Wenn bereits bei der Herstellung des erfindungsgemäßen Polyurethan-Präpolymers OH-funktionelles Epoxidharz eingesetzt wird, kann die bei der Abmischung der Harzkomponente (A) verwendete Menge an Epoxidharz entsprechend reduziert werden.

Zur Herstellung der Harzkomponente (A) wird zunächst das erfindungsgemäße Polyurethan-Präpolymer hergestellt. Dies kann auf die vorstehend beschriebene Weise geschehen, in dem Vorläufer-Polyurethan-Präpolymer mit 1,2-Glycerincarbonat umgesetzt wird. Dabei können beispielsweise relative Mengen vom 10 bis 60 Gewichtsteilen (vorzugsweise 15 bis 50 Gewichtsteile, stärker bevorzugt 20 bis 40 Gewichtsteile) an Vorläufer-Polyurethan-Präpolymer auf 1 bis 10 Gewichtsteile (vorzugsweise 1 bis 8 Gewichtsteile, stärker bevorzugt 1,5 bis 5 Gewichtsteile) an 1,2-Glycerincarbonat sowie gegebenenfalls 0 bis 25 Gewichtsteile (vorzugsweise 10 bis 20 Gewichtsteile) an Weichmacher und gegebenenfalls 0 bis 0,4 Gewichtsteile (vorzugsweise 0,1 bis 0,3 Gewichtsteile) an Katalysator verwendet werden. Anschließend wird gemäß dieser Ausführungsform bis zum Verschwinden der Isocyanatbande im Bereich bei 2250 cm⁻¹ im IR-Spektrum umgesetzt. Daraufhin können weitere Bestandteile zugemischt werden, beispielsweise Epoxidharz in relativen Mengen von 2 bis 40 Gewichtsteilen (vorzugsweise 10 bis 35 Gewichtsteile, stärker bevorzugt 15 bis 30 Gewichtsteile), gegebenenfalls Füllstoffe in relativen Mengen von 0 bis 45 Gewichtsteilen (vorzugsweise 15 bis 40 Gewichtsteile, stärker bevorzugt 20 bis 30 Gewichtsteile), gegebenenfalls Pigmenten in relativen Mengen von 0 bis 4 Gewichtsteilen, und gegebenenfalls Additiven in relativen Mengen von 0 bis 5 Gewichtsteilen. Wenn bereits bei der Herstellung des erfindungsgemäßen Polyurethan-Präpolymers, d.h. vor dem Umsetzen bis zum Verschwinden der Isocyanatbande im Bereich bei 2250 cm⁻¹ im IR-Spektrum, OH-funktionelles Epoxidharz eingesetzt wird, kann die bei der Abmischung der Harzkomponente (A) verwendete Menge an Epoxidharz entsprechend angepasst werden.

In der Zweikomponenten-Beschichtungszusammensetzung gemäß der vorliegenden Erfindung sind die Harzkomponente (A) und die Härterkomponente (B) in voneinander getrennten Behältnissen angeordnet. Das Gewichtsverhältnis des Gesamtgewichts der Harzkomponente (A) zu dem Gesamtgewicht der Härterkomponente (B) ist dabei von den jeweiligen Konzentrationen der reaktiven Bestandteile abhängig. Beispielsweise hängt das Gewichtsverhältnis des Gesamtgewichts der Harzkomponente (A) zu dem Gesamtgewicht der Härterkomponente (B) vom gewählten Härtersystem in Komponente (B) (z.B. Aminkonzentration, etc.) ab. Amine im Härtersystem (B) können stöchiometrisch zu den reaktiven Stellen in dem Polyurethan-Präpolymer bzw. Epoxidharz eingesetzt werden, oder Amine werden über- und unterstöchiometrisch (90-130%) eingesetzt. In einer Ausführungsform beträgt das Gewichtsverhältnis des Gesamtgewichts der Harzkomponente (A) zu dem Gesamtgewicht der Härterkomponente (B) 100:17 bis 100:70, vorzugsweise 100:20 bis 100:60.

### Verwendung der Zweikomponenten-Beschichtungszusammensetzung

Die vorliegende Erfindung betrifft auch die Verwendung der vorstehend beschriebenen Zweikomponenten-Beschichtungszusammensetzung als Bodenbeschichtung oder zur Betoninstandsetzung. Die Erfindung kann in allen Bodenbeschichtungen (z.B. Industrieböden) und Betoninstandsetzungen (z.B. Oberflächenschutz im Parkhaus) eingesetzt werden. Die Zweikomponenten-Beschichtungszusammensetzung der Erfindung kann auch in Verwendungen, bei denen leicht elastifizierte bis hin zu rissüberbrückende Beschichtungen gewünscht bzw. erforderlich sind, eingesetzt werden, beispielsweise als hauptsächlich wirksamer Oberflächenschutz in Parkhaussystemen.

Gemäß der vorliegenden Erfindung kann ein Polyurethan-Präpolymer bereitgestellt werden, das zum einen isocyanatfrei ist und zum anderen bei der Anwendung in einer Beschichtungszusammensetzung nicht zur Abspaltung von Verkappungsmittel führt, wobei auch während der Aushärtung keine Isocyanatgruppen (kurzzeitig) frei werden. Das abspaltfrei blockierte Polyurethan-Präpolymer steht über die Carbonat- bzw. Epoxidfunktionalisierung weiterhin für Vernetzungsreaktionen zur Verfügung.

Weitere Vorteile der Erfindung beinhalten:
o Die Zweikomponenten-Beschichtungszusammensetzung kann arm an flüchtigen organischen Verbindungen (VOC) bzw. frei von Lösungsmittel sein;
o Die Lagerstabilität der Harzkomponente (A) ist verbessert, so dass kein bzw. weniger Stabilisator notwendig ist;
o Das isocyanatfreie Polyurethan-Präpolymer weist eine verhältnismäßig niedrige Viskosität auf;
o Die Verkappung des Polyurethan-Präpolymers kann einfach und bei moderaten Temperaturen durchgeführt werden;
o Es ist die Verwendung von unpolareren Weichmachern wie Dioctyladipaten möglich;
o Es ist die partielle Verwendung nachhaltiger Rohstoffe (Glycerincarbonat aus Glycerin) möglich.

### Anwendungsbeispiel

Zur Herstellung einer erfindungsgemäßen Zweikomponenten-Beschichtungszusammensetzung wurde zunächst eine Harzkomponente (A) mit den Bestandteilen gemäß folgender Tabelle 1 hergestellt:

**Tabelle 1**

| | | |
|---|---|---|
| 1) | 30,0 Gew.% | Vorläufer-Polyurethan-Präpolymer (z.B. Desmodur E14) |
| 2) | 3,0 Gew.% | 1,2-Glycerincarbonat |
| 3) | 15,0 Gew.% | Weichmacher (z.B. Santicizer 261) |
| 4) | 0,15 Gew.% | Katalysator (z.B. Borchikat 0244) |
| 5) | 25,0 Gew.% | Epoxidharz DGEBA (z.B. Epilox A 19-00) |
| 6) | 25,0 Gew.% | Füllstoff (z.B. Calziumcarbonat) |
| 7) | 0,7 Gew.% | Pigment (z.B. Poxpaste RAL 7001) |
| 8) | 1,25 Gew.% | Additiv (z.B. BYK 088) |

Das Vorläufer-Polyurethan-Präpolymer 1) wird mit dem 1,2-Glycerincarbonat 2) vorgelegt. Falls die Reaktionsführung bei Raumtemperatur durchgeführt wird, wird der Weichmacher 3) zur besseren Verarbeitbarkeit bevorzugt mit vorgelegt. Das Gemisch wird nach Zugabe des Katalysators 4) bei Raumtemperatur oder erhöhter Temperatur weitere 24 h gerührt bis zum vollständigen Verschwinden der Isocyanatbande im IR-Spektrum. Anschließend werden die Komponenten 5) bis 8) zugemischt bis die flüssigen Bestandteile im Produkt vermischt bzw. die festen Bestandweile homogen verteilt sind.

Ferner wurde eine Härterkomponente (B) mit 88,2 Gew. % aliphatischem Amin-Addukt (58,8 Gew. % 3,6-Dioxaoctamethylendiamin + 29,4 Gew. % Epoxidharz DGEBA) und 11,8 Gew. % an Verbindungen mit alkoholischen/phenolischen Gruppen (z.B. Cashewnussschalenöl/Cardanol) hergestellt.

Die vorstehende Harzkomponente (A) wurde mit der vorstehenden Härterkomponente (B) in einem Gewichtsverhältnis A/B von 100:25 vermischt. Nach dem Aushärten (sieben Tage bei Raumtemperatur) wurde bei der Zugprüfung nach DIN EN ISO 527 eine Bruchdehnung von 175% und eine Zugfestigkeit von 2,5 N/mm² erhalten.

## Patentansprüche

1. Polyurethan-Präpolymer, wobei die NCO-Endstellen des Polyurethan-Präpolymers durch kovalente Bindung vollständig blockiert sind,
***dadurch gekennzeichnet, dass***
die NCO-Endstellen des Polyurethan-Präpolymers mindestens zu einem Teil an die OH-Gruppe von 1,2-Glycerincarbonat gebunden sind und gegebenenfalls zum anderen Teil an OH-Gruppen eines Epoxidharzes gebunden sind.

2. Polyurethan-Präpolymer gemäß Anspruch 1, wobei die NCO-Endstellen des Polyurethan-Präpolymers vollständig an die OH-Gruppe von 1,2-Glycerincarbonat kovalent gebunden sind.

3. Verfahren zur Herstellung des Polyurethan-Präpolymers nach einem der Ansprüche 1 oder 2, umfassend die Schritte:
(I) Vorlegen und Mischen
o eines Vorläufer-Polyurethan-Präpolymers mit freien NCO-Endstellen, o 1,2-Glycerincarbonat und
o gegebenenfalls eines Epoxidharzes, das OH-Gruppen aufweist, und
anschließendes Umsetzen bis zum Verschwinden der Isocyanatbande im Bereich bei 2250 cm⁻¹ im IR-Spektrum,
oder
(II) Vorlegen und Mischen
o eines Vorläufer-Polyurethan-Präpolymers mit freien NCO-Endstellen, und
o 1,2-Glycerincarbonat, und
anschließendes Umsetzen bis eine Veränderung der Isocyanatbande im IR-Spektrum im Bereich bei 2250 cm⁻¹ nicht mehr nachzuweisen ist, bzw. der nach DIN EN 1242:2013 gewünschte NCO-Wert erreicht ist,
anschließend Zugeben eines Epoxidharzes, das OH-Gruppen aufweist, und anschließendes Umsetzen bis zum Verschwinden der Isocyanatbande im Bereich bei 2250 cm⁻¹ im IR-Spektrum,
oder
(III) Vorlegen und Mischen
o eines Vorläufer-Polyurethan-Präpolymers mit freien NCO-Endstellen, und
o eines Epoxidharzes, das OH-Gruppen aufweist, und
anschließendes Umsetzen bis eine Veränderung der Isocyanatbande im IR-Spektrum im Bereich bei 2250 cm⁻¹ nicht mehr nachzuweisen ist, bzw. der nach DIN EN 1242:2013 gewünschte NCO-Wert erreicht ist
anschließendes Zugeben von 1,2-Glycerincarbonat, und Umsetzen bis zum Verschwinden der Isocyanatbande im Bereich bei 2250 cm⁻¹ im IR-Spektrum.

4. Verfahren gemäß Anspruch 3, umfassend die Schritte:
Vorlegen und Mischen
o eines Vorläufer-Polyurethan-Präpolymers mit freien NCO-Endstellen und von 1,2-Glycerincarbonat, wobei die Stoffmenge an 1,2-Glycerincarbonat in dem resultierenden Gemisch von 1,0*n*x bis 1,4*n*x beträgt, wobei n die Stoffmenge an Vorläufer-Polyurethan-Präpolymer in dem resultierenden Gemisch und x die mittlere Anzahl an NCO-Endstellen in dem Vorläufer-Polyurethan-Präpolymer bezeichnet,
o gegebenenfalls Weichmacher, wobei die Stoffmenge an Weichmacher in dem resultierenden Gemisch von 0*n bis 3,0*n beträgt, wobei n die Stoffmenge an Vorläufer-Polyurethan-Präpolymer in dem resultierenden Gemisch bezeichnet, und
o 0,1 bis 0,3 Gew.%, bezogen auf das Gesamtgewicht des resultierenden Gemisches, an Katalysator, wobei der Katalysator aus organischen Metallsalzen und/oder tertiären Aminen ausgewählt ist,
anschließendes Umsetzen bis eine Veränderung der Isocyanatbande im IR-Spektrum im Bereich bei 2250 cm⁻¹ nicht mehr nachzuweisen ist.

5. Zweikomponenten-Beschichtungszusammensetzung mit einer Harzkomponente (A), die als härtbaren Bestandteil mindestens ein Polyurethan-Präpolymer nach Anspruch 1 oder 2 enthält, und einer Härterkomponente (B), die ein Härtungsmittel für das Polyurethan-Präpolymer in der Harzkomponente (A) enthält.

6. Zweikomponenten-Beschichtungszusammensetzung gemäß Anspruch 5, wobei die Härterkomponente (B) ein Aminhärter-System umfasst.

7. Zweikomponenten-Beschichtungszusammensetzung gemäß Anspruch 5 oder 6, wobei die Härterkomponente (B), jeweils bezogen auf das Gesamtgewicht der Härterkomponente (B), umfasst:
40-100 Gew.% eines Amins oder eines Amingemisches, und
0-60 Gew.% eines Beschleunigers.

8. Zweikomponenten-Beschichtungszusammensetzung gemäß einem der Ansprüche 5-7, wobei das Aminhärter-System mindestens eine Verbindung umfasst, die zwei oder mehr als zwei Amin-Gruppen aufweist.

9. Zweikomponenten-Beschichtungszusammensetzung gemäß einem der Ansprüche 5-7, wobei die Harzkomponente (A) weiterhin mindestens ein Epoxidharz enthält.

10. Zweikomponenten-Beschichtungszusammensetzung gemäß einem der Ansprüche 5-9, wobei die Harzkomponente (A), jeweils bezogen auf das Gesamtgewicht der Harzkomponente (A), umfasst:
20-60 Gew.% des Polyurethan-Präpolymers nach Anspruch 1 oder 2,
10-30 Gew.% mindestens eines Epoxidharzes,
15-40 Gew.% an Füllstoffen und/oder Pigmenten,
1-10 Gew.% an Additiven,
gegebenenfalls 0-20 Gew.% an Weichmachern, und
gegebenenfalls 0-20 Gew.% an Reaktivverdünnern.

11. Zweikomponenten-Beschichtungszusammensetzung gemäß einem der Ansprüche 5-10, wobei die Harzkomponente (A), jeweils bezogen auf das Gesamtgewicht der Harzkomponente (A), umfasst:
25-55 Gew.% des Polyurethan-Präpolymers nach Anspruch 1 oder 2,
15-25 Gew.% mindestens eines Epoxidharzes,
20-35 Gew.% an Füllstoffen und/oder Pigmenten,
1-8 Gew.% an Additiven,
gegebenenfalls 0-15 Gew.% an Weichmachern, und
gegebenenfalls 0-15 Gew.% an Reaktivverdünnern.

12. Zweikomponenten-Beschichtungszusammensetzung gemäß einem der Ansprüche 5-11, wobei die Harzkomponente (A) und die Härterkomponente (B) in voneinander getrennten Behältnissen angeordnet sind, wobei das Gewichtsverhältnis des Gesamtgewichts der Harzkomponente (A) zu dem Gesamtgewicht der Härterkomponente (B) 100:17 bis 100:70 beträgt, vorzugsweise 100:20 bis 100:60.

13. Verwendung der Zweikomponenten-Beschichtungszusammensetzung nach einem der Ansprüche 5-12 als Bodenbeschichtung oder zur Betoninstandsetzung.

## Geänderte Patentansprüche

### Geänderte Patentansprüche gemäss Regel 137(2) EPÜ.

1. Polyurethan-Präpolymer, wobei die NCO-Endstellen des Polyurethan-Präpolymers durch kovalente Bindung vollständig blockiert sind,
***dadurch gekennzeichnet, dass***
die NCO-Endstellen des Polyurethan-Präpolymers zu einem Teil an die OH-Gruppe von 1,2-Glycerincarbonat gebunden sind und zum anderen Teil an OH-Gruppen eines Epoxidharzes gebunden sind.

2. Verfahren zur Herstellung des Polyurethan-Präpolymers nach Anspruch 1, umfassend die Schritte:
(I) Vorlegen und Mischen
o eines Vorläufer-Polyurethan-Präpolymers mit freien NCO-Endstellen, und
o 1,2-Glycerincarbonat, und
anschließendes Umsetzen bis eine Veränderung der Isocyanatbande im IR-Spektrum im Bereich bei 2250 cm⁻¹ nicht mehr nachzuweisen ist, bzw. der nach DIN EN 1242:2013 gewünschte NCO-Wert erreicht ist,
anschließend Zugeben eines Epoxidharzes, das OH-Gruppen aufweist, und anschließendes Umsetzen bis zum Verschwinden der Isocyanatbande im Bereich bei 2250 cm⁻¹ im IR-Spektrum,
oder
(II) Vorlegen und Mischen
o eines Vorläufer-Polyurethan-Präpolymers mit freien NCO-Endstellen, und
o eines Epoxidharzes, das OH-Gruppen aufweist, und
anschließendes Umsetzen bis eine Veränderung der Isocyanatbande im IR-Spektrum im Bereich bei 2250 cm⁻¹ nicht mehr nachzuweisen ist, bzw. der nach DIN EN 1242:2013 gewünschte NCO-Wert erreicht ist
anschließendes Zugeben von 1,2-Glycerincarbonat, und Umsetzen bis zum Verschwinden der Isocyanatbande im Bereich bei 2250 cm⁻¹ im IR-Spektrum.

3. Verfahren gemäß Anspruch 2, umfassend die Schritte:
Vorlegen und Mischen
o eines Vorläufer-Polyurethan-Präpolymers mit freien NCO-Endstellen und von 1,2-Glycerincarbonat, wobei die Stoffmenge an 1,2-Glycerincarbonat in dem resultierenden Gemisch von 1,0*n*x bis 1,4*n*x beträgt, wobei n die Stoffmenge an Vorläufer-Polyurethan-Präpolymer in dem resultierenden Gemisch und x die mittlere Anzahl an NCO-Endstellen in dem Vorläufer-Polyurethan-Präpolymer bezeichnet,
o gegebenenfalls Weichmacher, wobei die Stoffmenge an Weichmacher in dem resultierenden Gemisch von 0*n bis 3,0*n beträgt, wobei n die Stoffmenge an Vorläufer-Polyurethan-Präpolymer in dem resultierenden Gemisch bezeichnet, und
o 0,1 bis 0,3 Gew.%, bezogen auf das Gesamtgewicht des resultierenden Gemisches, an Katalysator, wobei der Katalysator aus organischen Metallsalzen und/oder tertiären Aminen ausgewählt ist,
anschließendes Umsetzen bis eine Veränderung der Isocyanatbande im IR-Spektrum im Bereich bei 2250 cm⁻¹ nicht mehr nachzuweisen ist.

4. Zweikomponenten-Beschichtungszusammensetzung mit einer Harzkomponente (A), die als härtbaren Bestandteil mindestens ein Polyurethan-Präpolymer nach Anspruch 1 enthält, und einer Härterkomponente (B), die ein Härtungsmittel für das Polyurethan-Präpolymer in der Harzkomponente (A) enthält.

5. Zweikomponenten-Beschichtungszusammensetzung gemäß Anspruch 4, wobei die Härterkomponente (B) ein Aminhärter-System umfasst.

6. Zweikomponenten-Beschichtungszusammensetzung gemäß Anspruch 4 oder 5, wobei die Härterkomponente (B), jeweils bezogen auf das Gesamtgewicht der Härterkomponente (B), umfasst:
40-100 Gew.% eines Amins oder eines Amingemisches, und
0-60 Gew.% eines Beschleunigers.

7. Zweikomponenten-Beschichtungszusammensetzung gemäß einem der Ansprüche 4-6, wobei das Aminhärter-System mindestens eine Verbindung umfasst, die zwei oder mehr als zwei Amin-Gruppen aufweist.

8. Zweikomponenten-Beschichtungszusammensetzung gemäß einem der Ansprüche 4-6, wobei die Harzkomponente (A) weiterhin mindestens ein Epoxidharz enthält.

9. Zweikomponenten-Beschichtungszusammensetzung gemäß einem der Ansprüche 4-8, wobei die Harzkomponente (A), jeweils bezogen auf das Gesamtgewicht der Harzkomponente (A), umfasst:
20-60 Gew.% des Polyurethan-Präpolymers nach Anspruch 1,
10-30 Gew.% mindestens eines Epoxidharzes,
15-40 Gew.% an Füllstoffen und/oder Pigmenten,
1-10 Gew.% an Additiven,
gegebenenfalls 0-20 Gew.% an Weichmachern, und
gegebenenfalls 0-20 Gew.% an Reaktivverdünnern.

10. Zweikomponenten-Beschichtungszusammensetzung gemäß einem der Ansprüche 4-9, wobei die Harzkomponente (A), jeweils bezogen auf das Gesamtgewicht der Harzkomponente (A), umfasst:
25-55 Gew.% des Polyurethan-Präpolymers nach Anspruch 1 oder 2,
15-25 Gew.% mindestens eines Epoxidharzes,
20-35 Gew.% an Füllstoffen und/oder Pigmenten,
1-8 Gew.% an Additiven,
gegebenenfalls 0-15 Gew.% an Weichmachern, und
gegebenenfalls 0-15 Gew.% an Reaktivverdünnern.

11. Zweikomponenten-Beschichtungszusammensetzung gemäß einem der Ansprüche 4-10, wobei die Harzkomponente (A) und die Härterkomponente (B) in voneinander getrennten Behältnissen angeordnet sind, wobei das Gewichtsverhältnis des Gesamtgewichts der Harzkomponente (A) zu dem Gesamtgewicht der Härterkomponente (B) 100:17 bis 100:70 beträgt, vorzugsweise 100:20 bis 100:60.

12. Verwendung der Zweikomponenten-Beschichtungszusammensetzung nach einem der Ansprüche 4-11 als Bodenbeschichtung oder zur Betoninstandsetzung.
